# EUROPÄISCHE PATENTSCHRIFT

(11) **EP 2 802 247 B1**
(45) Veröffentlichungstag und Bekanntmachung des Hinweises auf die Patenterteilung: **13.04.2016**
(21) Anmeldenummer: 14708022.0
(22) Anmeldetag: 05.03.2014
(51) Int. Cl.: A47J 37/00

(54) **GRILLVORRICHTUNG MIT ZULUFTSTEUERUNG**
GRILL DEVICE HAVING SUPPLY-AIR CONTROL
APPAREIL À GRILLADES À ADMISSION D'AIR RÉGLABLE

(30) Priorität: 06.03.2013 DE 102013203805
(43) Veröffentlichungstag der Anmeldung: 19.11.2014
(73) Patentinhaber: Metallwarenfabrik Marktoberdorf GmbH & Co. KG, 87616 Marktoberdorf (DE)
(72) Erfinder: SCHNEIDER, Paul, 87640 Biessenhofen/Altdorf (DE)
(74) Vertreter: Weickmann & Weickmann PartmbB
(86) Internationale Anmeldenummer: PCT/EP2014/054239
(87) Internationale Veröffentlichungsnummer: WO 2014/135576

(56) Entgegenhaltungen:
- DE-U1-202007 017 595
- KR-A- 20100 118 738
- KR-U- 20110 003 315

## Beschreibung

Die Erfindung betrifft eine Grillvorrichtung mit einem Grillfeuerbehälter für ein Grillfeuer und einem an dem Grillfeuerbehälter befestigten oder befestigbaren Aschebehälter mit einem Ascheeinlass, wobei der Ascheeinlass zu dem Grillfeuerbehälter gerichtet ist, und wobei die Luftzufuhr aus der Umgebungsluft zu dem Grillfeuer durch eine Relativbewegung zwischen dem Aschebehälter und dem Grillfeuerbehälter einstellbar ist, wobei die Relativbewegung in vertikaler Richtung erfolgt und mittels der vertikalen Relativbewegung eine Form und/oder eine Abmessung eines wenigstens durch den Aschebehälter und den Grillfeuerbehälter begrenzten Luftdurchlassweges einstellbar sind, wobei zur Ausführung der Relativbewegung zwischen dem Aschebehälter und dem Grillfeuerbehälter eine Bewegungseinrichtung mit einer beweglichen Halterung für den Aschebehälter an dem Grillfeuerbehälter mittelbar oder unmittelbar befestigt ist.

Grillvorrichtungen sind seit langem bekannt und beliebt. Sie dienen der Zubereitung von Speisen auf dem offenen Feuer. Vor allem werden sie im Freien verwendet und insbesondere mit Gas oder Festbrennstoffen wie Holz oder Holzkohle betrieben. Bei der Verwendung von Festbrennstoffen fällt bei der Verbrennung Asche an, die der Grillvorrichtung entnommen werden muss, um diese betriebsfähig zu halten. Außerdem ist es zur Steuerung des Grillfeuers üblich, die Luftzufuhr zu dem Grillfeuer einzustellen, um so seine Wärmeentwicklung zu beeinflussen. Die Steuerung der Luftzufuhr kann dabei durch Drosselung der Zuluft oder durch Drosselung des Austretens von Abgasen aus der Grillvorrichtung bewirkt werden. Die letztere Lösung erfordert, dass die Grillvorrichtung ein im Wesentlichen gegen Gasaustritt abgeschlosenes System ist, bei dem der Gasaustritt gezielt gesteuert werden kann, während die erstgenannte Lösung mit Zuluftsteuerung im Unterschied dazu vorteilhaft das offene Grillen über einem nicht abgeschlossenen Grillfeuer ermöglicht.

Die Entfernung von Asche aus der Grillvorrichtung wird üblicherweise bewirkt, indem das Feuer auf einem Feuerrost betrieben wird, durch den von dem Festbrennstoff abfallende Asche nach unten fallen kann. Daher ist ein Aschekasten im Allgemeinen unterhalb des Grillfeuers angeordnet. Um die Entnahme von Asche aus der Grillvorrichtung zu erleichtern, sind im Stand der Technik Aschebehälter bekannt, die sich aus der Grillvorrichtung entnehmen lassen, um diese unabhängig von der Grillvorrichtung zu entleeren. Eine günstige Position für eine Zuluftsteuerung ist im Allgemeinen unterhalb des Grillfeuers. Daher bietet sich an, einen Aschebehälter zusätzlich mit der Zuluftsteuerung zu versehen. Derartige Lösungen sind im Stand der Technik bereits bekannt.

In der US 5,809,991 ist beispielsweise eine Grillvorrichtung beschrieben, bei der unter einem Ascheauslass eines Grillfeuerbehälters ein mittels Bajonettverschluss abnehmbarer Aschebehälter vorgesehen ist. Der Aschebehälter ist an seinem Umfang mit mehreren Löchern versehen, vor denen sich im Inneren des Aschebehälters ein drehbarer Ring befindet. In diesem Ring sind fluchtend zu den Löchern in dem Aschebehälter ebenfalls gleich große Löcher vorgesehen, so dass bei einer Fluchtung der Löcher in dem Ring und in dem Aschebehälter Luft durch den Aschebehälter zu dem Grillfeuer gelangen kann. Der Ring ist gegenüber dem Aschebehälter verdrehbar ausgeführt, so dass durch Verdrehen des Rings die Fluchtung der Löcher aufgehoben und somit der Zuluftstrom zu dem Grillfeuer gedrosselt werden kann. Eine ähnliche Lösung ist in der US 4,966,126 beschrieben, jedoch mit dem Unterschied, dass der Aschebehälter über eine Führung horizontal von der Grillvorrichtung abgenommen werden kann. Eine ähnliche Lösung offenbart auch die US 5,471,916, bei der der Aschebehälter ebenfalls horizontal über eine Führung abgezogen werden kann, jedoch befindet sich die Zuluftsteuerung nicht in dem Aschebehälter, sondern in einem Stutzen, der sich unterhalb des Grillfeuerbehälters befindet und der an seinem unteren Ende die horizontale Führung zum Abnehmen des Aschebehälters aufweist, so dass der Stutzen ein Bindeglied mit integrierter Zuluftsteuerung zwischen dem Aschebehälter und dem Grillfeuerbehälter darstellt. Die Zuluftsteuerung ist ebenso wie in der US 5,809,991 über einen verdrehbaren Ring mit Löchern, die mit Löchern in dem Stutzen fluchten, ausgeführt.

Eine weitere Lösung bietet die US 2006/0266345 A1 an. Hier wird ein rechteckiger Aschekasten vorgeschlagen, der horizontal über eine Führung in den Boden eines Grillbehälters einschiebbar gestaltet ist. Die Zuluftsteuerung geschieht über seitliche Schlitze in dem Aschekasten, vor denen fluchtend Schlitze in einem Schieber angeordnet sind. Zur Steuerung der Luftzufuhr kann der Schieber gegenüber den Schlitzen in den Aschekasten verschoben werden, so dass die Fluchtung der Löcher verringert und der Zuluftstrom gedrosselt wird. Der Schieber ist mit einem von außen betätigbaren Griff verbunden. Über denselben Griff kann der Aschekasten auch von der Grillvorrichtung abgezogen werden. Beim Wegziehen des Aschekastens wird der Ascheauslass der Grillvorrichtung geöffnet, so dass durch den dabei entstehenden horizontalen Spalt zwischen Grillfeuerbehälter und Aschekasten Luft zu dem Grillfeuer einströmen kann. Eine Steuerung der Wärmeabgabe des Grillfeuers auf diese Weise ist in der US 2006/0266354 A1 jedoch nicht vorgesehen, sondern ein denkbarer Nebeneffekt, mit dem ebenfalls eine Zuluftsteuerung bewirkt werden könnte. Nachteilig an einer solchen denkbaren Zuluftsteuerung ist jedoch, dass bei Öffnung eines solchen Spalts des Ascheauslasses Asche von dem Grillfeuer nicht in den Aschekasten, sondern durch den Spalt aus der Grillvorrichtung austreten kann.

Ein weiterer Nachteil von mehreren der genannten Vorrichtungen besteht darin, dass die Zuluftsteuerungen in einem mittleren Bereich des Aschekastens oder sogar einem unteren Bereich des Aschekastens angeordnet sind. Dadurch ist es möglich, dass Asche aus den Öffnungen der Zuluftsteuerung und somit aus der Grillvorrichtung austritt. Zudem kann Asche, die auch größere Brocken enthalten kann, die Zuluftsteuerung blockieren und insbesondere verhindern, dass diese sich vollständig schließen lässt. Dadurch ist es nicht möglich, den Aschebehälter vollständig zu füllen, ohne dass von der Asche der Zuluftstrom behindert wird bzw. diese aus den Zustromöffnungen fallen kann. Die gezeigten Ausführungen der Zuluftsteuerung haben außerdem den Nachteil, dass sie auf der Verringerung einer Überlappung von Öffnungen beruhen. Dies erfordert grundsätzlich zwei zueinander verschiebliche Elemente mit den Öffnungen. Um die Verschieblichkeit zu ermöglichen, können diese nicht beliebig fest aneinandergepresst sein, so dass Spalten zurückbleiben, durch die auch in der vollständig geschlossenen Stellung Luft zu dem Grillfeuer gelangen kann. Ein vollständiger Luftabschluss durch die Zuluftsteuerung ist kaum möglich.

Aus der US 2006/0054158 A1 ist eine Grillvorrichtung der eingangs genannten Art bekannt. Diese weist einen halbkugelförmigen Grillfeuerbehälter mit einem unteren Ascheauslass auf, welcher von einem nach unten von dem Grillfeuerbehälter abstehenden ringförmigen Kragen umgeben ist. An dem ringförmigen Kragen befinden sich rampenförmige Führungsbahnen für Haltestifte, die an einem Aschebehälter als Elemente zur Verbindung des Aschebehälters mit dem Grillfeuerbehälter vorgesehen sind. Der Aschebehälter kann von unten her außen über den Kragen des Ascheauslasses des Grillfeuerbehälters gestülpt werden, so dass die Haltestifte in vertikale Einführungskanäle zu den rampenförmigen Führungsbahnen an dem Kragen des Ascheauslasses kommen. Ein Verdrehen des Aschebehälters führt dann nach vollständiger Aufnahme der Haltestifte des Aschebehälters in den Einführungskanälen zu einer gegenseitigen Ineingriffnahme der Haltestifte und der rampenförmigen Führungsbahnen, so dass eine bajonettverschlussartige Verbindung hergestellt wird. Weiteres Verdrehen des Aschebehälters führt dazu, dass die Haltestifte auf den rampenförmigen Führungsbahnen gleiten, wobei der Aschebehälter je nach Drehrichtung abgesenkt oder angehoben wird. An dem Aschebehälter ist ein nach außen abstehender Griff befestigt, den die Bedienungsperson zum Verdrehen des Aschebehälters relativ zum Grillfeuerbehälter verwenden kann. Je nach Drehstellung des Aschebehälters relativ zum Grillfeuerbehälter und somit je nach Positionierung der Haltestifte auf den rampenförmigen Führungsbahnen wird ein Luftdurchlassweg zwischen dem Grillfeuerbehälter und dem oberen Rand des Aschekastens bzw. im weiteren Verlauf zwischen der Außenseite des Kragens des Ascheauslasses und dem damit überlappenden Randbereich des Aschebehälters größenmäßig bestimmt.

Ein derartiges Konzept für die Zuluftsteuerung wird auch bei einem Grillgerät gemäß der DE 20 2007 017 595 U1 verfolgt.

Die Herstellung der bajonettartigen Verbindungen zwischen dem Aschebehälter und dem Grillfeuerbehälter sowie auch das Lösen dieser Verbindungen beim Anbringen bzw. Abnehmen des Aschebehälters vom Grillfeuerbehälter ist relativ umständlich. Dies gilt auch für das Verdrehen des Aschebehälters zum Zwecke der Zuluftsteuerung am Grillfeuerbehälter, insbesondere, wenn nach mehrmaligem Gebrauch der Grillvorrichtung Asche die betreffenden Komponenten beschmutzt und zu einer erhöhten Reibung oder gar Klemmwirkung geführt hat. Um diese zu überwinden, hat die Bedienungsperson relativ große Kräfte auf die Grillvorrichtung auszuüben, was zu unbeabsichtigten Bewegungen der Grillvorrichtung insgesamt führen kann. Dies stellt insbesondere bei laufendem Grillbetrieb und hoher Temperatur der Grillvorrichtung eine Gefahrenquelle dar.

Der vorliegenden Erfindung liegt die Aufgabe zugrunde, eine Grillvorrichtung der gattungsgemäßen Art bedienungsfreundlicher als bisher auszugestalten.

Ausgehend von einer Grillvorrichtung mit den eingangs genannten Merkmalen wird diese Aufgabe erfindungsgemäß dadurch gelöst, dass die Halterung eine um eine normalerweise horizontale Schwenkachse schwenkbar relativ zum Grillfeuerbehälter gelagerte Schwenkgabel mit zwei den Aschebehälter zwischen sich aufnehmenden und tragenden Gabelschenkeln umfasst, so dass eine Schwenkbewegung der Schwenkgabel eine jeweilige Vertikalbewegungskomponente zum Heben und Senken des Aschebehälters aufweist, und dass die Bewegungseinrichtung ein Betätigungsglied zum Schwenken der Schwenkgabel um die Schwenkachse aufweist, wobei die die Bewegungseinrichtung ein die Halterung beaufschlagendes Schraubgetriebe umfasst, welches durch Drehung des Betätigungsgliedes betätigbar ist, um die Halterung um die Schwenkachse zu verschwenken und dabei den Aschebehälter relativ zum Grillfeuerbehälter vertikal zu verstellen.

Die Schwenkgabel als Teil der bewegbaren Halterung für den Aschebehälter ermöglicht ein einfaches Vorgehen beim Entfernen des Aschebehälters von dem Grillfeuerbehälter und auch beim Anbringen des Aschebehälters an den Grillfeuerbehälter, wobei der Aschebehälter einfach aus der Halterung bzw. der Schwenkgabel ausgehängt bzw. darin eingehängt werden muss. Da dies ohne Überwindung unkontrollierter Klemmeffekte und Krafteinwirkungen auf den Grillfeuerbehälter erfolgen kann, ist das Risiko eines unbeabsichtigten Verschiebens oder Verkippens der Grillvorrichtung beim Anbringen oder Ablösen des Aschebehälters weitestgehend gebannt. Darüber hinaus ermöglicht die Bewegungseinrichtung ein bedienungsfreundliches Verstellen der Luftzufuhr zum Grillfeuerbehälter durch Anheben bzw. Absenken des Aschebehälters. Im Vergleich mit den bekannten bajonettverschlussartigen Verstellmöglichkeiten zur Steuerung der Luftzufuhr ermöglicht die Erfindung in unterschiedlichen Varianten der Bewegungseinrichtung ein kontrolliertes Verschwenken der Schwenkgabel und somit ein ruckfreies, bequemes und feinfühliges Anheben bzw. Absenken des Aschebehälters, um die Luftzufuhr zu steuern.Durch die Ausgestaltung der Bewegungseinrichtung mit Schraubgetriebe, ist femer ein bedienungsfreundliches stufenfreies Verstellen des Aschebehälters möglich.

Gemäß einer bevorzugten Ausführungsform der Erfindung ist der Aschebehälter abnehmbar und gelenkig an der Schwenkgabel angehängt, so dass er sich um eine zur Schwenkachse der Schwenkgabel parallele Gelenkachse unter Schwerkraftwirkung normalerweise horizontal ausrichten, d.h. selbst austarieren kann, wenn die Schwenkgabel um deren Schwenkachse verschwenkt wird.

Eine solche Lösung ist mit sehr einfachen Mitteln realisierbar, z. B. durch eine gelenkige, lösbare Anhängverbindung zwischen dem Aschebehälter und der Schwenkgabel durch nach oben offene Randausnehmungen in der Schwenkgabel und darin drehbar aufgenommene Stifte des Aschebehälters, wobei diese Stifte an diametral entgegengesetzten Seiten des Aschebehälters von diesem radial nach außen abstehen. Eine solche gelenkige, lösbare Anhängverbindung ermöglicht nicht nur das einfache Austarieren des Aschebehälters in einer waagerechten Position, sondern bietet darüber hinaus auch die Möglichkeit einer besonders einfachen Vorgehensweise des Aushängens bzw. Einhängens des Aschebehälters aus der Schwenkgabel bzw. in die Schwenkgabel.

In einer Ausführungsform der Erfindung ist der Aschebehälter soweit um die Gelenkachse schwenkbar, dass er ohne Entfernung von der Grillvorrichtung nach unten entleerbar ist.

Gemäß einer Weiterbildung der Erfindung mit Schraubgetriebe ist die Bewegungseinrichtung derart gestaltet, dass das Schraubgetriebe die Halterung nur lose berührend ohne gegenseitige Ineingriffnahme beaufschlägt, so dass zwischen dem Schraubgetriebe und der Halterung Druckkräfte übertragen werden können, um die Schwenkgabel um die Schwenkachse zu verschwenken. Die Halterung stützt sich dabei stets an der Ausgangskomponente des Schraubgetriebes ab, weil sie unter der Wirkung der Gewichtskraft des Aschebehälters in Richtung nach unten belastet ist und dabei ein Drehmoment erfährt, was sie gegen die Ausgangskomponente des Schraubgetriebes drückt. Dabei folgt die Halterung mit ihrer Schwenkgabel Rückzugsbewegungen und Vorschubbewegungen der Ausgangskomponente des Schraubgetriebes.

Das Schraubgetriebes kann ein Spindeltrieb mit drehbar gelagerter Spindel und darauf linear verschiebbarer Mutter sein, die die Halterung beaufschlagt.

Vorzugsweise umfasst das Schraubgetriebe jedoch eine mit einem Außengewinde versehene Kurbelspindel als Betätigungsglied und eine von der Kurbelspindel durchsetzte und damit in Gewindeeingriff stehende Mutter, die relativ zu dem Grillfeuerbehälter fixiert ist, so dass bei Drehung der Kubelspindel diese durch Schraubwirkung linear vor- und zurückbewegbar ist, um die Halterung bzw. Schwenkgabel zu verschwenken. Gemäß einer Ausführungsform liegt die Kurbelspindel mit einem axialen Ende als Ausgangskomponente des Schraubgetriebes stirnseitig an der Halterung lose an, wobei sie mit ihrem anderen Ende der Halterung abgewandt nach außen absteht und an diesem anderen Ende einen Kurbelbetätigungsgriff aufweist. Die Bewegungseinrichtung ist vorzugsweise an einem Mechanismusträger angeordnet, der an dem Grillfeuerbehälter befestigt ist, wobei die gabelförmige Halterung um ihre Schwenkachse schwenkbar an dem Mechanismusträger gehalten ist. Auch das Schraubgetriebe ist vorzugsweise an dem Mechanismusträger angeordnet.

Vorzugsweise ist zumindest das Betätigungsglied durch ein Hitzeschild gegenüber dem Grillfeuerbehälter thermisch abgeschirmt.

Weitere Ausgestaltungen der Erfindung sind in den Ansprüchen 9 - 13 angegeben.

Eine vertikale Relativbewegung ist auch eine Relativbewegung, die einen nicht zu vernachlässigenden vertikalen Anteil aufweist. Ein Luftdurchlassweg ist ein Pfad, dem die Luft von ihrem Weg von der äußeren Umgebung der Grillvorrichtung durch eine Drosselstelle zwischen dem Grillfeuerbehälter und dem Aschebehälter zum Grillfeuer folgt. Ein Luftdurchlassweg kann beispielsweise aus Spalten, Kanälen, Labyrinthen, Öffnungen oder dgl., auch in Kombination, bestehen. Bevorzugt wird durch die vertikale Relativbewegung eine vertikale Ausdehnung einer Luftdurchlassöffnung eingestellt. Ein Vorteil dieser Lösung ist, dass die Luftzufuhr zu dem Grillfeuer über eine Drosselstelle eingestellt werden kann, die zumindest teilweise durch die Elemente gebildet ist, die ohnehin unabdingbar vorhanden sind, nämlich dem Grillfeuerbehälter und dem Aschebehälter. Ein weiterer Vorteil ist, dass der Aschebehälter bis zu der vorteilhaft am oberen Rand des Aschebehälters liegenden Drosselstelle für die Zuluft mit Asche gefüllt werden kann. Die Asche kann somit nicht aus dem Aschebehälter austreten, bevor dieser vollständig gefüllt ist, oder eine Mechanik der Zuluftsteuerung blockieren. Vorzugsweise ist der Aschebehälter mit Ausnahme des Ascheeinlasses luftdicht ausgeführt. Vorzugsweise ist die Luftdurchlassöffnung zwischen dem Grillfeuerbehälter und dem Aschebehälter luftdicht verschließbar. Dann kann das Grillfeuer von der Unterseite her vollständig von Luftzutritt abgeschlossen werden.

Bei der Erfindung kommt es nicht darauf an, ob der Luftdurchlassweg auch noch andere als vertikale Ausdehnungen und/oder Verläufe hat. Wesentlich ist, dass ein Abschnitt vorhanden ist, dessen Drosselwirkung durch eine vertikale Relativbewegung zwischen Aschbehälter einstellbar ist und dass dies eine Steuerwirkung auf die Luftzufuhr zu dem Grillfeuer hat. Vorzugsweise ist die Grillvorrichtung als Kugelgrill ausgebildet.

In einer Ausführungsform umfasst der Luftdurchlassweg eine Luftdurchlassöffnung in Form von wenigstens einem Abschnitt eines vertikalen Ringspalts zwischen dem Aschebehälter und dem Grillfeuerbehälter.

Bevorzugt ist der Ringspalt ein ringsum geschlossener Ringspalt. Eine Luftdurchlassöffnung in Form eines Ringspalts oder eines Abschnitts davon kann beispielsweise erreicht werden, wenn der Grillfeuerbehälter um den Ascheauslass herum mit einem wenigstens näherungsweise ebenen Boden versehen wird und der Aschebehälter mit einem wenigstens näherungsweise ebenen oberen Rand. Liegen der ebene Rand und der ebene Boden einander mit einem Abstand gegenüber, so bildet sich ein Ringspalt. Wird der Rand des Aschebehälters an den Boden des Grillfeuerbehälters gebracht, so kann der Spalt bei korrespondierenden Formen von Boden und Rand vollständig geschlossen werden. Wenn der Boden des Grillfeuerbehälters aus Blech besteht, können durch Andrücken Unebenheiten wie etwa Wellen oder dgl., die ein dichtes Verschließen der Luftdurchlassöffnung verhindern könnten, durch den Verschließdruck eingeebnet werden, so dass dennoch ein dichter Abschluss entsteht. Wenn der Aschebehälter im Wesentlichen zylinderförmig oder topfförmig ausgeführt ist, ist dessen ebener oberer Rand in Andruckrichtung relativ steif, so dass seine Form dem weicheren Boden des Grillfeuerbehälters vorzugsweise aufgeprägt wird. Ein solcher Ringspalt kann einen Teil der Luftdurchlassöffnung für Umgebungsluft zu dem Grillfeuer bilden oder er kann die gesamte Luftdurchlassöffnung bilden.

In einer weiteren Ausführungsform verläuft der Luftdurchlassweg durch einen vertikalen Drosselabschnitt zwischen einem den Ascheauslass umgebenden vertikalen Abschnitt des Grillfeuerbehälters und einem vertikalen Abschnitt des Aschebehälters.

Dazu ist es ausreichend, wenn der Verlauf der Abschnitte teilweise vertikal ist. Durch eine solche Form des Luftdurchlassweges wird die Zuluft zu dem Grillfeuer durch einen vertikalen Ringspalt gezwungen. Die Wirkung des vertikalen Ringspalts ist eine verstärkte Drosselung der Zuluft, so dass eine Zuluftsteuerung, die zusätzlich mit einer Verstellung der Höhe des Ringspalts arbeitet, eine weniger feine Einstellbarkeit benötigt, da sie nicht allein die Drosselung übernimmt. Somit sinken die Anforderungen an die Präzision von Teilen und Bewegungsmechanik.

Ein vertikaler Abschnitt des Grillfeuerbehälters kann an dessen Unterseite beispielsweise als ringförmiger Kragen oder als Bund mit anderem als rundem, beispielsweise viereckigem oder mehreckigem Querschnitt von der Unterseite des Grillfeuerbehälters nach unten abstehen. Der vertikale Abschnitt des Aschebehälters ist typischerweise ein oberer Randabschnitt des Aschebehälters. Der Querschnitt des oberen Randes des Aschebehälters hat vorzugsweise dieselbe Form wie ein Querschnitt des von dem Boden des Grillfeuerbehälters vorstehenden Kragens oder Bundes, wobei jedoch der Innendurchmesser des oberen Randabschnitts des Aschebehälters etwas größer als der Außendurchmesser des Kragens oder Bundes ist, um den vertikalen Ringspalt herstellen zu können. Der Ascheauslass aus dem Grillfeuerbehälter befindet sich innerhalb des Bundes oder des Rings.

In einer weiteren Ausführungsform ist eine vertikale Höhe des vertikalen Abschnitts des Luftdurchlasswegs einstellbar.

Die Drosselwirkung des vertikalen Abschnitts hängt von dessen Länge in Durchtrittsrichtung der Zuluft zu dem Grillfeuer ab. Die Zuluft zu dem Grillfeuer strömt in vertikaler Richtung durch den Drosselabschnitt, so dass die Veränderung der vertikalen Länge des Drosselabschnitts eine Veränderung von dessen Drosselwirkung bewirkt. Die Länge des Drosselspalts kann durch relative vertikale Verschiebung der vertikalen Abschnitte des Grillfeuerbehälters bzw. des Aschebehälters zueinander erreicht werden, wodurch sich deren Überlappung verändert. Vorzugsweise ist diese Veränderung der Drosselwirkung mit einer Verstellung der Höhe eines vertikalen Ringspalts zwischen dem Aschebehälter und dem Grillfeuerbehälter gekoppelt. Auf diese Weise wird die Änderung der Drosselwirkung bei vertikaler Bewegung des Aschebehälters relativ zu dem Grillfeuerbehälter verstärkt.

Der Ascheauslass aus dem Grillfeuerbehälter ist eine Öffnung in dessen Boden. Der Rand einer solchen Öffnung kann nach außen und unten tiefgezogen sein, so dass sich der Abschnitt mit wenigstens anteilig vertikalem Verlauf ergibt. Vorzugsweise ist der Verlauf des so gezogenen Kragens ab einem Übergangsbereich vollständig in vertikaler Richtung ausgebildet. Alternativ kann an dem Rand oder nahe dem Rand des Ascheauslasses ein Ring oder dgl. als Abschnitt mit wenigstens anteilig vertikalem Verlauf befestigt werden. Vorzugsweise wird der Aschebehälter mit seinem Innenumfang über den Kragen bzw. den Ring geschoben, um so einen Drosselspalt und einen Ringspalt zwischen Aschebehälter und Grillfeuerbehälter zu bilden. Der Vorteil des Kragens bzw. Rings besteht in einer zuverlässigen Positionierung des Aschebehälters gegenüber dem Grillfeuerbehälter sowie in einer geeigneten Drosselwirkung. Vorzugsweise ist der Rand des Aschebehälters nach außen verrundet. Auf diese Weise ergibt sich eine Einfädelverrundung an der Innenseite des Randes des Aschebehälters, so dass die Vorpositionierung zum Aufschieben des Aschebehälters auf den Kragen bzw. Ring weniger exakt sein muss. Außerdem wird die Neigung zum Verkanten verringert. Im Falle eines verrundeten Übergangbereichs zwischen dem Kragen bzw. Ring zu dem Boden des Grillfeuerbehälters ist der Radius an dem Rand des Aschebehälters größer als der Verrundungsradius des Übergangbereichs ausgeführt, so dass der Rand des Aschebehälters auf dem ebenen Teil des Bodens des Grillfeuerbehälters zu liegen kommt und nicht auf dem Übergangsbereich. Wäre der Radius des Randes des Aschebehälters kleiner als der Radius am Übergang zwischen dem Boden des Grillfeuerbehälters und dem Ring bzw. Kragen, so könnten sich die beiden Verrundungen im Falle des Zusammenpressens miteinander verklemmen, was zu einem schwierigen Lösen der beiden Teile voneinander führen kann. Besonders bevorzugt sind die Radien der Verrundung des Aschebehälters und am Übergang zwischen dem Boden des Grillfeuerbehälters und dem Ring bzw. Kragen gleich groß. Ein weiterer Vorteil des Kragens bzw. Rings am Boden des Aschebehälters ist, dass durchfallende Asche ins Innere des Aschebehälters geleitet wird. Ein Austritt durch den Ringspalt, wie er ohne den Kragen bzw. Ring denkbar wäre, ist somit nahezu ausgeschlossen.

Zur Ausgestaltung der Bewegungseinrichtung und des Schraubgetriebes ist noch anzumerken, dass der Aschebehälter in einem Abstand von der Schwenkachse der Halterung befestigt ist, so dass der Aschebehälter durch den Hebelarm zwischen der Schwenkachse der Halterung und der Befestigungsstelle des Aschebehälters eine Bewegung auf einem Abschnitt einer Kreisbahn erfährt. Die Kreisbahn des Aschebehälters ist dabei so angeordnet, dass der Aschebehälter in einer Ausführungsform mit einem vertikalen Drosselspalt derart auf den Grillfeuerbehälter zugeführt wird, dass sich ein Drosselabschnitt durch Überlappung von vertikalen Abschnitten des Grillfeuerbehälters und des Aschebehälters ergibt. Der Aschebehälter kommt auf der Kreisbahn unter dem Ascheauslass zu liegen. Die Schwenkachse der Halterung, um die sich der Aschebehälter bewegt, liegt vorzugsweise außerhalb des Aschebehälters. Dadurch wird ein angemessen langer Hebelarm erzielt. Vorzugsweise verläuft die Schwenkachse der Halterung an der Halterung durch einen Mechanismusträger, der an dem Grillfeuerbehälter befestigt ist und der die Halterung und das Schraubgetriebe trägt.

Der Druck auf die Halterung oder einem dazu gehörenden Hebel wird auf einen Kraftangriffspunkt an der Halterung ausgeübt, wobei der Kraftangriffspunkt außerhalb der Schwenkachse der Halterung liegt.

Kräfte können relativ zwischen dem Mechanismusträger und der Halterung durch Drehung der außengewindetragenden Kurbelspindel ausgeübt werden, wobei die Kurbelspindel eine Schraubbewegung erfährt. Alternativ kann statt der Kurbel ein Handrad oder ein Drehknopf an einer betreffenden Spindel vorgesehen sein. Der Kurbelgriff, das Handrad oder der Drehknopf sind vorzugsweise aus einem wärmeisolierenden Material hergestellt.

Besonders geeignet sind Kunststoffe, Holz und Keramiken. In einem alternativen Ausführungsbeispiel kann ein außengewindetragendes Element an der Halterung befestigt sein und eine Mutter in dem Mechanismusträger drehbar ausgeführt sein, so dass durch eine Drehung der Mutter eine axiale Bewegung des außengewindetragenden Elements bewirkt wird. In noch einem weiteren Ausführungsbeispiel kann eine Mutter in der Halterung vorgesehen sein, wobei ein außengewindetragendes Element in diese Mutter eingreift und sich zudem an dem Mechanismusträger abstützt, um so einen Zug oder Druck zwischen dem Mechanismusträger und der Mutter in der Halterung, die in diesem Fall den Angriffspunkt bildet, zu bewirken.

Aufgrund der gelenkigen Anhängung des Aschebehälters kann eine Drehbewegung, die einer Bewegung des Aschebehälters auf der Kreisbahn um die Schwenkachse der Halterung überlagert ist, entkoppelt werden. Vorzugsweise befindet sich der Schwerpunkt des Aschebehälters vertikal unterhalb der Befestigungsstelle zwischen der Halterung und dem Aschebehälter, so dass der frei drehbare Aschebehälter durch die Schwerpunktlage in eine Position gedreht wird, in der der Ascheeinlass dem Grillfeuerbehälter zugekehrt ist. Durch die freie Drehbarkeit des Aschebehälters gegenüber der Halterung kann sich der Aschebehälter besser an den Boden des Grillfeuerbehälters anlegen, weil durch den rotativen Freiheitsgrad Fertigungstoleranzen der Teile ausgeglichen werden können. Außerdem wird während der Relativbewegung des Aschebehälters zu dem Grillfeuerbehälter eine Schrägstellung der Ascheeinlassöffnung und somit eine virtuelle Verkleinerung des Ascheeinlasses gegenüber der herabfallenden Asche vermieden.

Der Aschebehälter ist, wie schon erwähnt, vorzugsweise durch reversiblen Formschluss einhängbar. Besonders bevorzugt ist dieser Formschluss durch wenigstens einen Stift an dem Aschebehälter und wenigstens einer Aussparung in der Halterung realisiert. Alternativ kann der Stift auch an der Halterung und die Aussparung in dem Aschebehälter angeordnet sein. Vorzugsweise lässt sich der Aschebehälter in einer Stellung der Halterung entnehmen, in der die Zuluftsteuerung die Luftzufuhr nicht unterbindet. In einer solchen Entnahmestellung ist der Aschebehälter gegenüber einer Luftabschlussstellung abgesenkt.

Im Folgenden wird eine beispielhafte Ausführungsform einer erfindungsgemäßen Grillvorrichtung anhand der Figuren im Anhang beschrieben, in denen
- Fig. 1: schematisch die Ausführungsform der Grillvorrichtung in einer Seitenansicht und in einer Entnahmestellung des Aschebehälters zeigt,
- Fig. 2: schematisch die Ausführungsform der Grillvorrichtung in einer Frontansicht und in einer Entnahmestellung des Aschebehälters zeigt,
- Fig. 3: schematisch einen Querschnitt durch die Ausführungsform der Grillvorrichtung und in einer Entnahmestellung des Aschebehälters zeigt,
- Fig. 4: schematisch die Ausführungsform der Grillvorrichtung in einer Seitenansicht und in einer vollständig geschlossenen Stellung des Luftdurchlassweges von der Umgebungsluft zu einem Grillfeuer in der Grillvorrichtung zeigt,
- Fig. 5: schematisch ein weiteres Ausführungsbeispiel der Erfindung zeigt, welches sich von dem vorstehend erläuterten Ausführungsbeispiel durch eine Abwandlung der Bewegungseinrichtung unterscheidet, und
- Fig. 6: ein nicht maßstäblich gezeigtes Detail aus Fig. 5 mit Blickrichtung gemäß dem in Fig. 5 mit VI gekennzeichneten Pfeil darstellt.

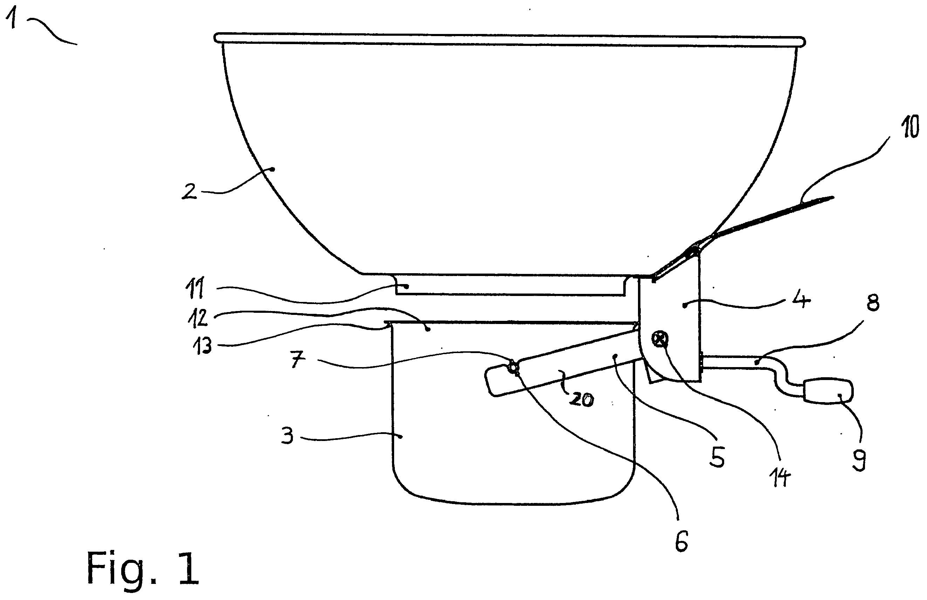

Fig. 1 zeigt schematisch eine Seitenansicht der Ausführungsform der Grillvorrichtung 1, die den Grillfeuerbehälter 2 und den Aschebehälter 3 umfasst. Der Aschebehälter 3 ist bevorzugt becherförmig ausgeführt. Er ist unten geschlossen. Oben weist er einen Ascheeinlass auf. Der Umfang des Aschebehälters ist im Wesentlichen zylinderförmig gestaltet. Der Grillfeuerbehälter 2 ist als Teil eines Kugelgrills ausgeführt. Der Aschebehälter 3 ist an dem Grillfeuerbehälter 2 über einen Mechanismusträger 4 und einer Halterung 5 befestigt. Die Halterung 5 umfasst eine Schwenkgabel 20 und weist vorzugsweise an ihrem von dem Mechanismusträger 4 weggerichteten Endabschnitt der Schwenkgabel 20 eine Aussparung 6 auf, in die ein am Außenumfang des Aschebehälters 3 befestigter Stift 7 eingreift. Der Außenumfang des Stifts 7 hat vorzugsweise einen kreisrunden Querschnitt. Die Aussparung 6 weist vorzugsweise eine wenigstens abschnittsweise kreisrunde Kontur auf. Die Aussparung 6 ist dabei auf einer oberen Kante der Schwenkgabel 20 angeordnet. An dem Mechanismusträger 4 ist ein Druckelement 8 in Form einer Kurbelspindel befestigt. Am Ende der Kurbelspindel ist ein Kurbelgriff 9 vorgesehen. Um den Kurbelgriff 9 vor Hitze von dem Grillfeuerbehälter 2 zu schützen, kann an dem Grillfeuerbehälter 2 zwischen dem Grillfeuerbehälter 2 und dem Kurbelgriff 9 ein Hitzeschutzblech 10 befestigt sein. An der Unterseite des Grillfeuerbehälters 2 ist ein Kragen 11 vorgesehen, der vorzugsweise aus dem Material des Bodens des Grillfeuerbehälters 2 tiefgezogen ist. Im Inneren des Kragens 11 befindet sich der Ascheauslass aus dem Grillfeuerbehälter 2. Der Durchmesser des Kragens 11 ist etwas geringer als der Innendurchmesser eines oberen Randbereichs 12 des Aschebehälters 3. Der obere Randbereich 12 des Aschebehälters 3 ist trichterförmig nach außen gekröpft, d.h. er weist an seinem oberen Ende eine nach außen gerichtete Verrundung 13 auf, die als Einfädelhilfe zum Einschieben des Kragens 11 in den Aschebehälter 3 dient. Außerdem ist das Ende am äußeren Umfang der Verrundung 13 in vertikaler Richtung elastischer als der zylindrische Abschnitt des Aschebehälters 3, so dass sich der äußere Umfang der Verrundung 13 durch die größere Nachgiebigkeit besser dicht an den Boden des Grillfeuerbehälters 2 anlegen und so die Luftzufuhr in das Innere des Grillfeuerbehälters besser abschließen kann. Die Halterung 5 und damit die Schwenkgabel 20 ist um eine im Wesentlichen horizontale Schwenkachse 14 schwenkbar.

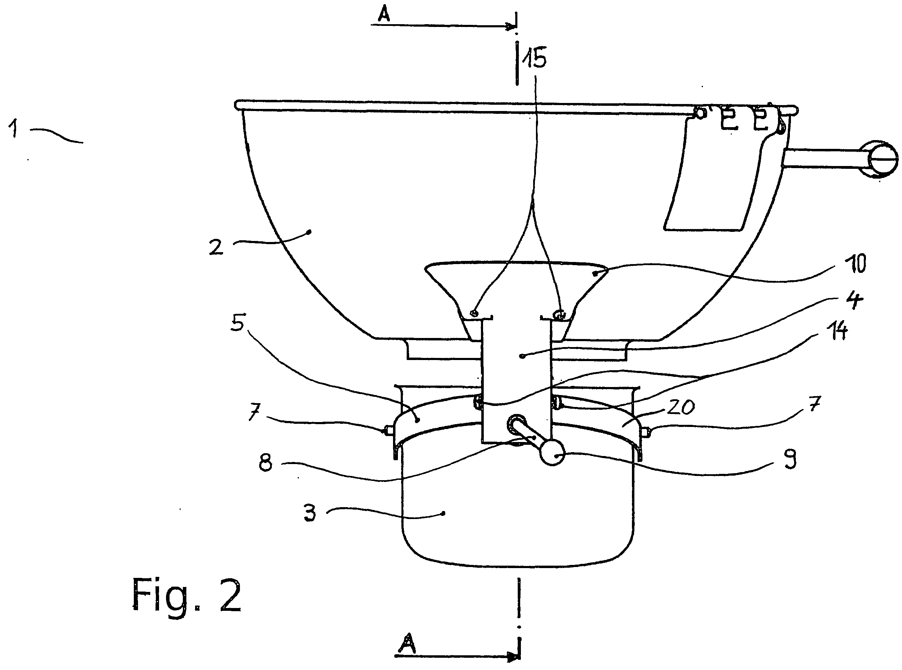

Fig. 2 zeigt schematisch eine Frontansicht der Ausführungsform der Grillvorrichtung. Im Folgenden werden zusätzliche Merkmale beschrieben, die in der Fig. 1 nicht zu sehen sind. Der Aschebehälter 3 ist mit zwei Stiften 7 ausgestattet, die miteinander fluchten und einander gegenüberliegend an dem Aschebehälter 3 befestigt sind. Sie werden von der Schwenkgabel 20 getragen, wobei jeweils einer der Stifte 7 auf einem Schenkel der Schwenkgabel 20 aufliegt. Die Halterung 5 weist vorzugsweise gebogene oder abgewinkelte Abschnitte auf, die die Schwenkgabel 20 bilden. Die Halterung 5 ist von einer Schwenkachse 14 gehalten, die bevorzugt mit zwei Schrauben, als Stift mit zwei Nietköpfen oder als Nieten ausgeführt ist, wobei die Schrauben- oder Nietköpfe in der Fig. 2 zu sehen sind. In dem Ausführungsbeispiel mit zwei Schrauben sind diese in die Halterung eingeschraubt und durch Löcher in dem Mechanismusträger 4 gesteckt, so dass diese Anordnung die Schwenkachse 14 bildet. Die Schwenkachse 14 durchdringt zwei einander gegenüberliegende Seitenwände des Mechanismusträgers 4, die senkrecht zur Bildebene liegen. Der Mechanismusträger 4 ist beispielsweise mit zwei

Nieten oder Schweißpunkten 15 an dem Grillfeuerbehälter 2 befestigt. Mit den Nieten oder Schweißpunkten 15 kann zugleich das Hitzeschutzblech 10 an dem Grillfeuerbehälter 2 befestigt sein. Der Mechanismusträger 4 und das Hitzeschutzblech 10 können in einem Ausführungsbeispiel einteilig sein.

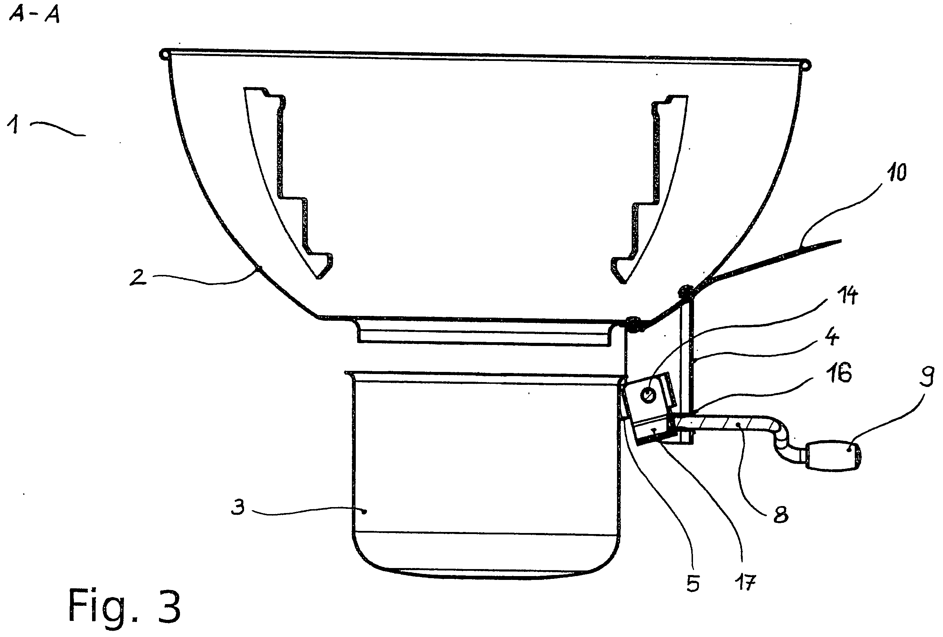

Fig. 3 zeigt schematisch einen Querschnitt der Ausführungsform der Grillvorrichtung 1, wobei der Querschnitt in der in Fig. 2 als A - A angegebenen Ebene liegt. Im Folgenden werden weitere Merkmale beschrieben, die in den Figuren 1 und 2 nicht gezeigt sind. Der in der Fig. 3 gezeigte Querschnitt verläuft durch den nicht abgekröpften Teil der kurbelförmigen Stange 8. Dieser in der Fig. 3 als linker Abschnitt dargestellte Teil der Stange 8 ist in einem Ausführungsbeispiel mit einem Außengewinde versehen. Das Außengewinde der Stange 8 ist in einem Innengewinde einer Nietmutter 16 aufgenommen. Diese Nietmutter kann in ein Loch in der in Fig. 2 gezeigten Frontseite des Mechanismusträgers 4 verdrehfest eingesetzt sein. Das zu dem Aschebehälter 3 gerichtete Ende der kurbelförmigen Stange 8 berührt einen Hebel 17 der Halterung 5 an einem Kraftangriffspunkt. Der Hebel 17 erstreckt sich vorzugsweise senkrecht zu dem den Aschebehälter 3 haltenden Schwenkgabelschenkel und von der Schwenkachse 14 aus nach unten. Der Kraftangriffspunkt auf den Hebel 17 befindet sich bevorzugt an einem unteren Abschnitt des Hebels 17. Die Schwenkachse 14 durchdringt die Halterung 5 in einem oberen Abschnitt des Hebels 17.

Eine Drehung der als kurbelförmige Stange ausgebildeten Kurbelspindel 8 bewirkt eine axiale Verlagerung derselben. Verlagert sich die kurbelförmige Stange 8 auf den Aschebehälter 3 zu, so bewirkt dies ein Anheben des Aschebehälters 3. Dabei wird die Drehbewegung der kurbelförmigen Stange 8 in eine axiale Translation derselben umgewandelt. Diese Translation bewirkt ein Verschwenken der Halterung 5, welche wiederum für eine Bewegung des Aschebehälters 3 auf einer Kreisbahn sorgt. Der Aschebehälter 3 richtet sich dabei horizontal aus.

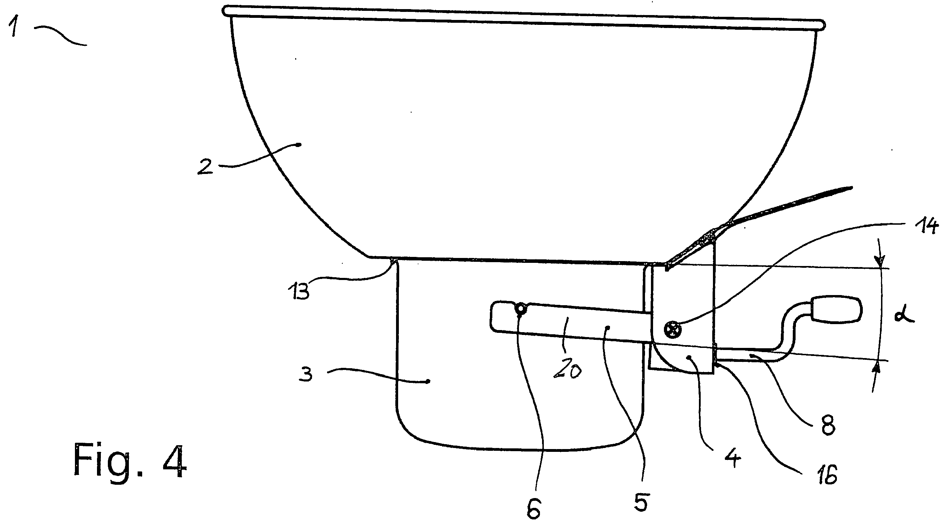

Figur 4 zeigt schematisch eine Seitenansicht der Ausführungsform der Grillvorrichtung 1 in einer Stellung, in der der Luftdurchlassweg von der Umgebungsluft zu einem Grillfeuer in dem Grillfeuerbehälter 2 vollständig geschlossen ist. Im Folgenden werden zusätzliche Merkmale beschrieben, die den vorangehenden Figuren nicht entnommen werden können. Der Aschebehälter 3 liegt mit der Verrundung 13 an dem Boden des Grillfeuerbehälters 2 an. Dadurch wird der Luftdurchlassweg dicht verschlossen. Um zu bewirken, dass sich der Aschebehälter 3 in dieser Position befindet, ist die kurbelförmige Stange 8 in die Nietmutter 16 bis zu einer Anschlagstellung eingeschraubt. Im Inneren des Mechanismusträgers 4 ist dadurch der Hebel 17 maximal weit nach links verschwenkt, wodurch die Halterung 5 maximal nach oben verlagert ist. Hierdurch wird eine Andruckkraft des Aschebehälters 3 an den Grillfeuerbehälter 2 bewirkt. In dieser Stellung ist die Halterung 5 gegenüber dem Boden des Grillfeuerbehälters 2 um einen Winkel α in eine Richtung geneigt, in der sich der Endabschnitt der Halterung 5 mit der Aussparung 6 näher an dem Grillfeuerbehälter 2 befindet als der Abschnitt der Halterung 5, an dem die Schwenkachse 14 angeordnet ist. Der Winkel α beträgt vorzugsweise etwa 3°. Mit einem solchen Winkel wird vorteilhaft ein Andrücken des Aschebehälters 3 an den Grillfeuerbehälter 2 in eine im Wesentlichen senkrechte Richtung bewirkt. Im Gegensatz dazu beträgt der Winkel in der maximalen Öffnungsstellung des Aschebehälters 3 gegenüber dem Grillfeuerbehälter vorzugsweise etwa 15°. In der maximalen Öffnungsstellung ist der Abschnitt der Halterung 5 mit der Aussparung 6 weiter von dem Grillfeuerbehälter 2 entfernt als der Abschnitt der Halterung 5, an dem die Schwenkachse 14 angeordnet ist.

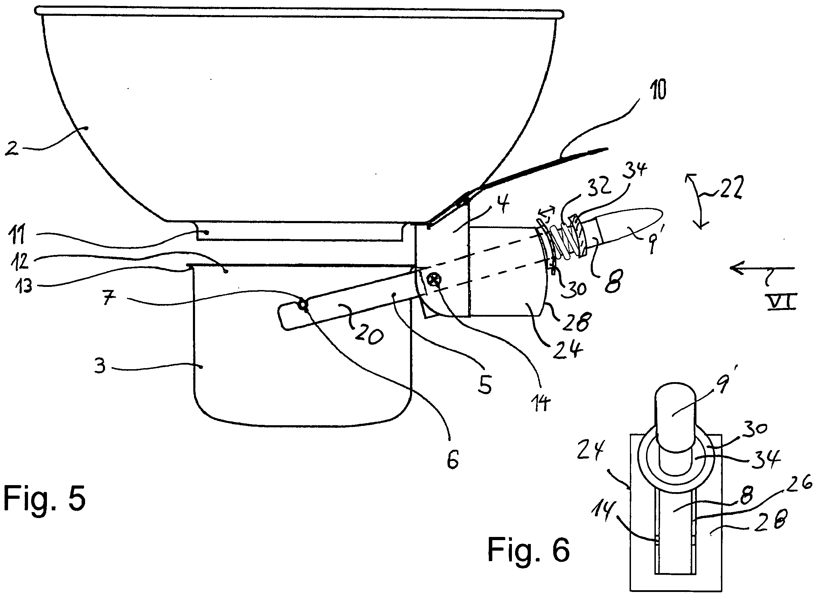

Unter Bezugnahme auf die Fig. 5 und 6 wird nachstehend ein weiteres Ausführungsbeispiel einer Grillvorrichtung nach der Erfindung beschrieben. Das Ausführungsbeispiel nach Fig. 5 und 6 unterscheidet sich von dem vorstehend erläuterten Ausführungsbeispiel lediglich durch eine abgewandelte Bewegungseinrichtung zum Heben und Senken des Aschebehälters 3. Zum Verständnis dieses weiteren Ausführungsbeispiels werden im Folgenden im Wesentlichen nur die Abwandlungen gegenüber dem ersten Ausführungsbeispiel erläutert, so dass im Übrigen auf die vorausgegangene Beschreibung Bezug genommen werden kann. Strukturell und funktional gleiche Elemente der Ausführungsbeispiele sind in den Figuren mit korrespondierend gleichen Bezugszeichen gekennzeichnet.

Bei dem zweiten Ausführungsbeispiel gemäß Fig. 5 und Fig. 6 ist an der Schwenkgabel 20 ein davon nach außen abstehender starrer Hebel 8 vorgesehen, der gemeinsam mit der Schwenkgabel 20 unmittelbar um die Schwenkachse 14 verschwenkbar ist, wie dies durch den Doppelpfeil 22 angedeutet ist. Der Hebel 8 durchsetzt ein Schlitzgehäuse 24, welches an dem Mechanismusträger 4 befestigt ist. Wie aus Fig. 6 zu ersehen ist, weist das Schlitzgehäuse 24 einen vertikalen Längsschlitz 26 auf, der dem Hebel 8 einen oben und unten begrenztend Schwenkfreiheitsgrad gibt. An der in Fig. 5 rechtsliegenden Außenseite 28 des Schlitzgehäuses 24 weist dieses eine Kreisbogenkontur auf, für die die Schwenkachse 14 das Kreiszentrum darstellt. An dieser gebogenen Außenfläche 28 stützt sich ein auf der Hebelstange 8 axial verschiebbar gelagerter Klemmschuh 30 ab, welcher mittels einer sich einerseits am Klemmschuh 30 und andererseits an einem festen Kragen 34 der Hebelstange 8 abstützenden Druckfeder 32 gegen die Außenseite 28 des Schlitzgehäuses 24 vorgespannt ist. Die Klemmverbindung zwischen dem Klemmschuh 30 und der davon beaufschlagten Außenseite 28 des Schlitzgehäuses 24 hält den Hebel 8 und damit auch den Aschebehälter 3 in der jeweils eingestellten Schwenkposition. Zur Änderung dieser Schwenkposition kann der Klemmschuh 30 gegen die Wirkung der Feder 32 manuell von der Fläche 28 abgezogen werden, so dass der Hebel 8 dann leicht um die Schwenkachse 14 verschwenkbar ist. Der dann wieder in seine Klemmstellung freigegebene Klemmschuh 30 sorgt dann dafür, dass die gewählte neue Schwenkstellung beibehalten wird.

Es sei darauf hingewiesen, dass der Klemmmechanismus 30, 32, 34 z. B. durch eine Klemmschraube ersetzt sein könnte, die mit einem an der Hebelstange 8 vorzusehenden Außengewinde in Eingriff steht und anstelle des Klemmschuhs 30 gegen das Schlitzgehäuse 28 verspannt werden bzw. davon gelöst werden kann.

Eine weitere nicht gezeigte Variante sieht vor, dass der Hebel 8 insgesamt mit dem Aschebehälter in den Mechanismusträger 4 eingehängt bzw. aus dem Mechanismusträger 4 ausgehängt werden kann. Hierzu weist der Mechanismusträger eine Kulisse zur lösbaren Aufnahme von an der Halterung 5 vorgesehenen, die Schwenkachse 14 definierenden Gelenkzapfen auf.

## Patentansprüche

1. Grillvorrichtung (1) mit einem Grillfeuerbehälter (2) für ein Grillfeuer und einem an dem Grillfeuerbehälter (2) befestigten oder befestigbaren Aschebehälter (3) mit einem Ascheeinlass, wobei der Ascheeinlass zu dem Grillfeuerbehälter (2) gerichtet ist, und
wobei die Luftzufuhr aus der Umgebungsluft zu dem Grillfeuer durch eine Relativbewegung zwischen dem Aschebehälter (3) und dem Grillfeuerbehälter (2) einstellbar ist, wobei die Relativbewegung in vertikaler Richtung erfolgt und mittels der vertikalen Relativbewegung eine Form und/oder eine Abmessung eines wenigstens durch den Aschebehälter (3) und den Grillfeuerbehälter (2) begrenzten Luftdurchlassweges einstellbar sind, wobei zur Ausführung der Relativbewegung zwischen dem Aschebehälter (3) und dem Grillfeuerbehälter (2) eine Bewegungseinrichtung (5, 8, 16, 17) mit einer beweglichen Halterung (5) für den Aschebehälter (3) an dem Grillfeuerbehälter (2) mittelbar oder unmittelbar befestigt ist, wobei die Halterung (5) eine um eine horizontale Schwenkachse (14) schwenkbar relativ zum Grillfeuerbehälter (2) gelagerte Schwenkgabel mit zwei den Aschebehälter (3) zwischen sich aufnehmenden und tragenden Gabelschenkeln umfasst, so dass eine Schwenkbewegung der Schwenkgabel (20) eine jeweilige Vertikalbewegungskomponente zum Heben und Senken des Aschebehälters (3) aufweist, und dass die Bewegungseinrichtung (5, 8, 16,17) ein Betätigungsglied (8) zum Schwenken der Schwenkgabel (20) um die Schwenkachse (14) aufweist,
**dadurch gekennzeichnet, dass**
die Bewegungseinrichtung (5, 8, 16, 17) ein die Halterung (5) beaufschlagendes Schraubgetriebe (8,16) umfasst,
welches durch Drehung des Betätigungsgliedes (8) betätigbar ist, um die Schwenkgabel (20) um die Schwenkachse (14) zu verschwenken und dabei den Aschebehälter (3) relativ zum Grillfeuerbehälter (2) vertikal zu verstellen.

2. Grillvorrichtung nach Anspruch 1, **dadurch gekennzeichnet, dass** der Aschebehälter (3) abnehmbar und gelenkig an der Schwenkgabel (20) angehängt ist, so dass er sich um eine zur Schwenkachse (14) der Schwenkgabel (20) parallele Gelenkachse unter Schwerkraftwirkung horizontal ausrichten kann, wenn die Schwenkgabel (20) um deren Schwenkachse (14) verschwenkt wird.

3. Grillvorrichtung nach Anspruch 1 oder Anspruch 2, soweit letzterer auf Anspruch 2 rückbezogen ist, **dadurch gekennzeichnet, dass** die Bewegungseinrichtung derart gestaltet ist, dass das Schraubgetriebe (8, 16) die Halterung (5) nur lose berührend ohne gegenseitige Ineingriffnahme beaufschlägt, so dass zwischen dem Schraubgetriebe (8, 16) und der Halterung (5) Druckkräfte übertragen werden können, um die Schwenkgabel (20) um die Schwenkachse (14) zu verschwenken.

4. Grillvorrichtung nach Anspruch 1 oder einem der darauf rückbezogenen Ansprüche 3 bis 4, **dadurch gekennzeichnet, dass** das Schraubgetriebe (8, 16) eine mit einem Außengewinde versehene Kurbelspindel (8) als Betätigungsglied und eine von der Kurbelspindel (8) durchsetzte und damit in Gewindeeingriff stehende Mutter (16) umfasst.

5. Grillvorrichtung nach Anspruch 4, **dadurch gekennzeichnet, dass** die Mutter (16) relativ zu dem Grillfeuerbehälter (2) fixiert ist und die Kurbelspindel (8) drehbar darin gelagert ist, so dass sie bei ihrer Drehung durch Schraubwirkung linear vor- und zurückbewegbar ist, um die Schwenkgabel (20) zu verschwenken.

6. Grillvorrichtung nach Anspruch 4, **dadurch gekennzeichnet, dass** die Kurbelspindel (8) mit einem axialen Ende stirnseitig an der Halterung (5) lose anliegt und mit ihrem anderen Ende der Halterung (5) abgewandt nach außen absteht, wobei die Kurbelspindel (8) an diesem nach außen abstehenden Ende einen Kurbelbetätigungsgriff (9) aufweist.

7. Grillvorrichtung nach Anspruch 2 oder einem der darauf rückbezogenen Ansprüche, **dadurch gekennzeichnet, dass** eine gelenkige, lösbare Anhängverbindung zwischen dem Aschebehälter (3) und der Schwenkgabel (20) durch nach oben offene Randausnehmungen (6) in der Schwenkgabel (20) und darin drehbar aufgenommene Stifte (7) des Aschebehälters realisiert ist.

8. Grillvorrichtung nach einem der vorhergehenden Ansprüche, **gekennzeichnet durch** einen am Grillfeuerbehälter (2) befestigten Mechanismusträger, an dem die Schwenkgabel (20) um ihre Schwenkachse (14) schwenkbar gehalten ist.

9. Grillvorrichtung nach einem der vorhergehenden Ansprüche, **dadurch gekennzeichnet, dass** zumindest das Betätigungsglied (8) durch ein Hitzeschild (10) gegenüber dem Grillfeuerbehälter (2) thermisch abgeschirmt ist.

10. Grillvorrichtung nach einem der vorhergehenden Ansprüche, **dadurch gekennzeichnet, dass** der Luftdurchlassweg eine Luftdurchlassöffnung in Form von wenigstens einem Abschnitt eines vertikalen Ringspalts zwischen dem Aschebehälter (2) und dem Grillfeuerbehälter (3) umfasst.

11. Grillvorrichtung nach einem der vorhergehenden Ansprüche, **dadurch gekennzeichnet, dass** der Luftdurchlassweg durch einen vertikalen Drosselabschnitt zwischen einem vertikalen Abschnitt (11) des Grillfeuerbehälters (2) und einem vertikalen Abschnitt des Aschebehälters (3) verläuft.

12. Grillvorrichtung nach einem der vorhergehenden Ansprüche, **dadurch gekennzeichnet, dass** eine vertikale Höhe des vertikalen Drosselabschnitts des Luftdurchlasswegs einstellbar ist.

13. Grillvorrichtung (1) nach einem der vorangehenden Ansprüche, **dadurch gekennzeichnet, dass** der Grillfeuerbehälter (2) einen Ascheauslass mit einem Abschnitt (11) mit wenigstens anteilig vertikalem Verlauf aufweist, der in einer maximal angehobenen Stellung des Aschebehälters (3) radial außen von letzterem in einer den Luftdurchlassweg verschließenden Weise umgeben ist.

14. Grillvorrichtung nach Anspruch 13, **dadurch gekennzeichnet, dass** der Abschnitt (11) des Ascheauslasses eine ringförmige, nach unten von dem Grillfeuerbehälter (2) abstehende Umfangswand des Ascheauslasses ist und dass der Aschebehälter (3) an seinem oberen Rand (12) trichterförmig radial nach außen gekröpft ist.

## Claims

1. Grill device (1) comprising a barbecue container (2) for a barbecue and an ash container (3) which is fastened or able to be fastened to the barbecue container (2), comprising an ash inlet, the ash inlet facing the barbecue container (2), and
the air supply from the surrounding air to the barbecue being adjustable via a relative movement between the ash container (3) and the barbecue container (2), the relative movement taking place in the vertical direction and a shape and/or a dimension of an air passageway delimited at least by the ash container (3) and the barbecue container (2) being adjustable by means of the vertical relative movement, a movement device (5, 8, 16, 17) comprising a moveable bracket (5) for the ash container (3) being indirectly or directly fastened to the barbecue container (2) in order to carry out the relative movement between the ash container (3) and the barbecue container (2), the bracket (5) comprising a swivel fork which is mounted so as to be able to be swivelled relative to the barbecue container (2) about a horizontal swivel pin (14), which swivel fork comprises two fork limbs which receive and support the ash container (3) in between them, such that a swivel movement of the swivel fork (20) has a respective vertical movement component for raising and lowering the ash container (3), and such that the movement device (5, 8, 16, 17) comprises an actuating member (8) in order to swivel the swivel fork (20) about the swivel pin (14), **characterised in that**
the movement device (5, 8, 16, 17) comprises a worm gear (8, 16) which is applied to the bracket (5) and can be actuated by rotating the actuating member (8) in order to swivel the swivel fork (20) about the swivel pin (14) and thereby displace the ash container (3) vertically relative to the barbecue container (2).

2. Grill device according to claim 1, **characterised in that** the ash container (3) is attached in a removable and hinged manner to the swivel fork (20), such that said ash container can orient itself horizontally about a hinge axis, which is parallel to the swivel pin (14) of the swivel fork (20), under the effect of gravity, when the swivel fork (20) is swivelled about the swivel pin (14) thereof.

3. Grill device according to either claim 1 or claim 2, in so far as the latter refers back to claim 2, **characterised in that** the movement device is designed such that the worm gear (8, 16) acts on the bracket (5) in a manner only loosely in contact without mutual engagement, such that compression forces can be transmitted between the worm gear (8, 16) and the bracket (5), in order to swivel the swivel fork (20) about the swivel pin (14).

4. Grill device according to claim 1, or according to either claim 3 or claim 4 which refer back thereto, **characterised in that** the worm gear (8, 16) comprises a crank spindle (8), provided with an external thread, as the actuating member and a nut (16) which is penetrated by the crank spindle (8) and held in threaded engagement therewith.

5. Grill device according to claim 4, **characterised in that** the nut (16) is fixed relative to the barbecue container (2) and the crank spindle (8) is rotatably mounted therein such that it can be moved linearly forwards and backwards when it is rotated by means of a screw action, in order to swivel the swivel fork (20).

6. Grill device according to claim 4, **characterised in that** an axial end of the crank spindle (8) rests loosely on the end face of the bracket (5) and the other end of said crank spindle protrudes outwards so as to face away from the bracket (5), the crank spindle (8) having a crank actuating handle (9) on this outwardly protruding end.

7. Grill device according to claim 2 or any of the claims which refer back thereto, **characterised in that** a hinged, detachable coupling connection is achieved between the ash container (3) and the swivel fork (20) using edge recesses (6) in the swivel fork (20) which are open at the top and pins (7) of the ash container rotatably received therein.

8. Grill device according to any of the preceding claims, **characterised by** a mechanism support fastened to the barbecue container (2), on which support the swivel fork (20) is held so as to be able to be swivelled about the swivel pin (14) thereof.

9. Grill device according to any of the preceding claims, **characterised in that** at least the actuating member (8) is thermally shielded from the barbecue container (2) by means of a heat shield (10).

10. Grill device according to any of the preceding claims, **characterised in that** the air passageway comprises an air passage opening in the form of at least one portion of a vertical annular gap between the ash container (2) and the barbecue container (3).

11. Grill device according to any of the preceding claims, **characterised in that** the air passageway extends through a vertical choke portion between a vertical portion (11) of the barbecue container (2) and a vertical portion of the ash container (3).

12. Grill device according to any of the preceding claims, **characterised in that** a vertical height of the vertical choke portion of the air passageway is adjustable.

13. Grill device (1) according to any of the preceding claims, **characterised in that** the barbecue container (2) comprises an ash outlet having a portion (11) which has a vertical course at least in regions, which portion, in a maximally raised position of the ash container (3), is surrounded in an outwardly radial manner by said container in a manner which closes the air passageway.

14. Grill device according to claim 13, **characterised in that** the portion (11) of the ash outlet is an annular peripheral wall of the ash outlet which projects downwards from the barbecue container (2), and **in that** the ash container (3) is radially outwardly offset in a funnel-shaped manner at the upper edge (12) thereof.

## Revendications

1. Dispositif de grill (1) comportant une cuve de foyer du grill (2) pour un foyer du grill et un récupérateur de cendre (3) fixé ou pouvant être fixé à la cuve de foyer du grill (2) avec une admission de la cendre, dans lequel l'admission de la cendre est dirigée vers la cuve de foyer du grill, et dans lequel l'apport d'air provenant de l'air environnant vers le foyer du grill peut être réglé par un mouvement relatif entre le récupérateur de cendre (3) et la cuve de foyer du grill (2), dans lequel le mouvement relatif se fait dans le sens vertical et à l'aide du mouvement relatif vertical peuvent être réglées une forme et / ou une dimension d'un trajet de passage d'air limité au moins par le récupérateur de cendre (3) et la cuve de foyer du grill (2), dans lequel pour réaliser le mouvement relatif entre le récupérateur de cendre (3) et la cuve de foyer du grill (2) un dispositif de mouvement (5, 8, 16, 17) avec une attache amovible (5) pour le récupérateur de cendre (3) est fixé directement ou indirectement à la cuve de foyer du grill (2), dans lequel l'attache (5) comprend une fourche pivotante, avec deux branches de fourche portant et logeant entre elles le récupérateur de cendre (3), logée pivotante autour d'un axe de pivotement horizontal (14) par rapport à la cuve de foyer du grill (2), de sorte qu'un mouvement pivotant de la fourche pivotante (20) présente une composante de mouvement vertical respective pour lever et abaisser le récupérateur de cendre (3), et en ce que le dispositif de mouvement (5, 8, 16, 17) présente un élément de manoeuvre (8) pour faire pivoter la fourche pivotante (20) autour de l'axe de pivotement (14), **caractérisé en ce que** le dispositif de mouvement (5, 8, 16, 17) comprend un mécanisme à mouvement à vis (8, 16) agissant sur l'attache (5), lequel peut être actionné par rotation de l'élément de manoeuvre (8), pour pivoter la fourche pivotante (20) autour de l'axe de pivotement (14) et ainsi régler verticalement le récupérateur de cendre (3) par rapport à la cuve de foyer du grill (2).

2. Dispositif de grill selon la revendication 1, **caractérisé en ce que** le récupérateur de cendre (3) est accroché de manière amovible et articulée à la fourche pivotante (20) de sorte qu'il peut s'orienter horizontalement sous l'effet d'une force de gravité autour d'un axe d'articulation parallèle à l'axe de pivotement (14) de la fourche pivotante (20), lorsque la fourche pivotante (20) est pivotée autour de son axe de pivotement (14).

3. Dispositif de grill selon la revendication 1 ou la revendication 2, dans la mesure où ce dernier fait référence à la revendication 2, **caractérisé en ce que** le dispositif de mouvement est configuré de manière telle que le mécanisme à mouvement à vis (8, 16) agit sur l'attache (5) uniquement par contact lâche sans engagement réciproque de sorte qu'entre le mécanisme à mouvement à vis (8, 16) et l'attache (5) des forces de pression peuvent être transmises pour pivoter la fourche pivotante (20) autour de l'axe de pivotement (14).

4. Dispositif de grill selon la revendication 1 ou l'une des revendications 3 à 4 s'y rapportant, **caractérisé en ce que** le mécanisme à mouvement à vis (8, 16) comprend un arbre de manivelle (8), doté d'un filetage externe, comme élément de manoeuvre et un écrou (16) traversé par l'arbre de manivelle (8) et se trouvant en engagement de filetage avec l'arbre de manivelle (8).

5. Dispositif de grill selon la revendication 4, **caractérisé en ce que** l'écrou (16) est fixé par rapport à la cuve de foyer du grill (2) et l'arbre de manivelle (8) y est logé de façon rotative de sorte que lors de sa rotation il peut être déplacé en avant et en arrière de façon linéaire par vissage pour pivoter la fourche pivotante (20).

6. Dispositif de grill selon la revendication 4, **caractérisé en ce que** l'arbre de manivelle (8) adhère de façon lâche par une extrémité axiale du côté frontal à l'attache (5) et par son autre extrémité fait saillie vers l'extérieur de façon opposée à l'attache (5), l'arbre de manivelle (8) présentant à cette extrémité faisant saillie vers l'extérieur une poignée de commande de manivelle (9).

7. Dispositif de grill selon la revendication 2 ou l'une des revendications y faisant référence, **caractérisé en ce qu'**une liaison d'attache amovible, articulée est réalisée entre le récupérateur de cendre (3) et la fourche pivotante (20) par des évidements en bordure (6) ouverts vers le haut dans la fourche pivotante et des goujons (7) du récupérateur de cendre, logés de façon pivotante à l'intérieur.

8. Dispositif de grill selon l'une des revendications précédentes, **caractérisé par** un support de mécanisme fixé à une cuve de foyer du grill (2) sur laquelle la fourche pivotante (20) est maintenue de façon pivotante autour de son axe de pivotement (14).

9. Dispositif de grill selon l'une des revendications précédentes, **caractérisé en ce qu'**au moins l'élément de manoeuvre (8) est protégé thermiquement de la cuve de foyer du grill (2) par un écran thermique (10).

10. Dispositif de grill selon l'une des revendications précédentes, **caractérisé en ce que** le trajet de passage d'air comprend une ouverture de passage d'air en forme d'au moins une section d'une fente annulaire verticale entre le récupérateur de cendre (3) et la cuve de foyer du grill (2).

11. Dispositif de grill selon l'une des revendications précédentes, **caractérisé en ce que** le trajet de passage d'air passe à travers une section d'étranglement verticale entre une section verticale (11) de la cuve de foyer du grill (2) et une section verticale du récupérateur de cendre (3).

12. Dispositif de grill selon l'une des revendications précédentes, **caractérisé en ce qu'**une hauteur verticale de la section d'étranglement verticale du trajet de passage d'air est réglable.

13. Dispositif de grill (1) selon l'une des revendications précédentes, **caractérisé en ce que** la cuve de foyer du grill (2) présente une sortie de cendre avec une section (11) comportant au moins un écoulement proportionnellement vertical qui est entouré, dans une position soulevée au maximum du récupérateur de cendre (3), radialement à l'extérieur de ce dernier d'une manière obturant le trajet de passage d'air.

14. Dispositif de grill selon la revendication 13, **caractérisé en ce que** la section (11) de la sortie de cendre est une paroi périphérique, annulaire, faisant saillie vers le bas de la cuve de foyer du grill (2), du récupérateur de cendre et **en ce que** le récupérateur de cendre (3) est coudé radialement vers l'extérieur en forme d'entonnoir sur son bord supérieur (12).
